Europäisches Patentamt

European Patent Office

Office européen des brevets

(11) Veröffentlichungsnummer: **0 210 293**
**A1**

# EUROPÄISCHE PATENTANMELDUNG

(21) Anmeldenummer: 85109493.6

(22) Anmeldetag: 27.07.85

(51) Int. Cl.4: **B60K 37/06** , B60Q 1/14

(43) Veröffentlichungstag der Anmeldung:
04.02.87 Patentblatt 87/06

(84) Benannte Vertragsstaaten:
FR GB NL SE

(71) Anmelder: Iveco Magirus Aktiengesellschaft
Schillerstrasse 2
D-7900 Ulm/Donau(DE)

(72) Erfinder: Kraus, Ulrich, Dipl.-Des.
Lichtensteinstrasse 3
D-7900 Ulm(DE)
Erfinder: Egle, Elmar, Ing.-grad.
Sebastian-Fischer-Weg 32
D-7900 Ulm(DE)
Erfinder: Schmude, Leonhard, Dipl.-Des.
Stäudlenweg 24
D-7900 Ulm(DE)

(74) Vertreter: Socha, Peter
Iveco Magirus AG Postfach 2740
Schillerstrasse 2
D-7900 Ulm(DE)

(54) Schalt-Lenkrad-Anordnung für ein Kraftfahrzeug.

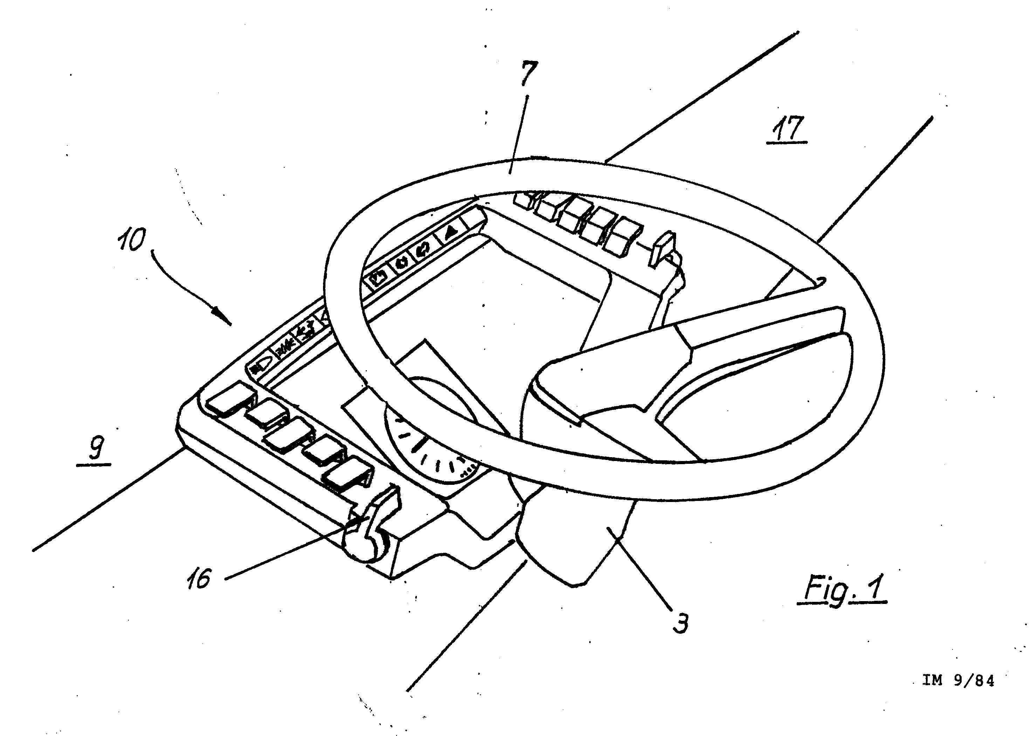

(57) Bei einer Schalt-Lenkrad-Anordnung (1) für ein Kraftfahrzeug sind unterhalb der Lenkradebene nahe der Lenksäule (2) am Lenkstock (3) Querarme (4, 5) angebracht, deren seitliche Enden fest mit einem U-förmigen Schalterrahmenteil (6) verbunden sind, um einen geschlossenen Schalterrahmen (10) mit innerem Hohlraum auszubilden. Der Rahmen (10) liegt im wesentlichen parallel zur Lenkradebene. Auf den Seitenstegen des Rahmens (10) sind Schalterhebel - (14) sowie Drehschalter (15) und auf dem oberen Quersteg Kontrolleinrichtungen (11) des Fahrzeugs angebracht, die im optimalen Sicht-und Griffbereich des Fahrers liegen (Figur 1).

Fig. 1

## Schalt-Lenkrad-Anordnung für ein Kraftfahrzeug

Die Erfindung betrifft eine Schalt-Lenkrad-Anordnung für ein Kraftfahrzeug, mit unterhalb der Lenkradebene nahe der Lenksäule am Lenkstock angebrachten Querarmen gemäß Oberbegriff des Anspruchs 1.

Aus DE-OS 28 27 338 ist eine vorerwähnte Schaltanordnung bekannt, bei der die Querarme als Kragarme ausgebildet sind, welche um die Lenkachse verschwenkt werden können. An den vordersten Enden der Kragarme befinden sich plattenförmige Schaltelemente, die zur Lenkradebene hin abgewinkelt oder konkav ausgebildet sind und jeweils an ihrer oberen Fläche sowie an den Seitenflächen und der Stirnfläche integrierte Schalter aufweisen. Ferner ist eine Verstellbarkeit der Kragarme in Richtung der Lenkachse vorgesehen. Die bekannte Anordnung mag zwar für Spezialfahrzeuge im Hinblick auf die dortigen Gegebenheiten und Anforderungen zweckmäßig sein. Bei üblichen Nutzfahrzeugen, insbesondere Straßenfahrzeugen, ist die Anordnung jedoch zu aufwendig getroffen und auch nicht zweckmäßig, zumal die Schalter bei ihr visuell unübersichtlich angeordnet sind. Darüber hinaus ist die Schwenkbarkeit der Kragarme bei üblichen Nutzfahrzeugen infolge der Veränderung der gewohnten Schalterpositionen sicherheitsbeeinträchtigend.

Unter Vermeidung der Nachteile der vorgenannten bekannten Schaltanordnung ist es Aufgabe der Erfindung, eine Schalt-Lenkrad-Anordnung mit unterhalb der Lenkradebene nahe der Lenksäule am Lenkstock angebrachten Querarmen der eingangs genannten Art zu schaffen, welche mit einfachen Mitteln insbesondere auch für übliche Nutzfahrzeuge optimale Bedienungsbedingungen ergibt.

Gelöst wird die der Erfindung zugrundeliegende Aufgabe durch einen im wesentlichen U-förmig ausgebildeten Schalterrahmenteil, der mit den lenksäulenfernen Enden der Querarme fest verbunden ist und in einer in etwa lenkradparallelen Ebene liegt, wobei die Basis des U-förmigen Schalterrahmenteils der Fahrzeugvorderseite zugewandt ist. Der Schalterrahmenteil zusammen mit den angeschlossenen Querarmen dient als Tragkörper für Bedienungsschalter und ist vorzugsweise in Lenkraddraufsicht als ein im wesentlichen rechteckiger geschlossener Rahmen ausgebildet, der als Formteil in Serie kostengünstig gefertigt werden kann.

Der Rahmen ist in bezug auf das Lenkrad so bemessen, daß in Lenkraddraufsicht die obere Hälfte des Lenkrades vom Rahmen in etwa gerade umschlossen ist, so daß die Bedienungsperson, der Fahrzeugführer, bei Draufsicht auf das Lenkrad außerhalb des Lenkrads die kranzartigen Bedienungsschalter auf dem Rahmen sehen und bedienen kann. Gleichwohl ist der Rahmen an nicht störender Stelle des Fahrzeugs kurz unterhalb des Lenkrads angeordnet, und es wird die Sicht zum eigentlichen Armaturenbrett nicht nennenswert beeinträchtigt. Der Fahrer hat trotz der Anordnung des erfindungsgemäßen Rahmens noch genügend Freiraum für die Beine.

Eine besonders kostengünstige Fertigung und ansprechende Erscheinungsform ist gegeben, wenn die Querarme fest mit dem Lenkstock in integrierter Weise ausgebildet sind. Durch die feste Montage des Schaltertragkörpers am Lenkstock besitzt bei Verstellung des Lenkrades in der Neigung oder in der Höhe der Tragkörper zwangsweise immer den gleichen Abstand vom Lenkrad. Dadurch ist eine optimale Bedienung der Schalter in jeder Lenkradstellung gegeben.

Eine bevorzugte Weiterbildung der Erfindung sieht vor, daß die Basis des U-förmigen Schalterrahmenteils oberseitig ebenflächig, jedoch abgewinkelt ist in einer Weise, daß in bezug auf eine Horizontale die Basisoberseitenabwinklung größer als die Abwinklung oder Neigung des Lenkrades ist. Ein Fahrer sieht mithin im wesentlichen senkrecht auf die abgewinkelte Rahmenteiloberfläche, an der vorzugsweise Kontrolleinrichtungen des Fahrzeugs, beispielsweise Kontrolleuchten, angeordnet sind.

Die Oberseite der Schenkel des U-förmigen Rahmenteils ist ebenfalls ebenflächig ausgebildet, wobei längs der Oberseite Schalterhebel vorgesehen sind (Zwei-oder Mehrstellungsschalter). Die Schalterhebel sind in Seitenansicht vorzugsweise L-förmig ausgebildet und können von oben sowie von unten, d.h. von seitlich außen von einer Bedienungsperson bedient bzw. untergriffen werden. Gleichwohl ist sichergestellt, daß ein Schalterhebel beispielsweise von unten durch eine unbeabsichtigte Bewegung des Knies nicht betätigt werden kann.

An jedem Schenkel sind vorzugsweise vier bis fünf Schalterhebel vorgesehen, so daß vielfach einem Finger einer Bedienungsperson ein Schalterhebel zugeordnet werden kann, der in günstiger Reichweite vom Lenkradkranz liegt, an dem sich gegebenenfalls der Daumen der Bedienungshand abstützt.

Im Bereich der Verbindungsstelle zwischen Querarm und zugeordnetem Schenkel des Rahmenteils können auch Drehschalter vorgesehen sein, deren Drehachse in Querrichtung des Fahrzeugs und in der Rahmenebene liegen und deren radial sich erstreckende Betätigungsglieder nach oben weisen, die dann ebenfalls leicht mit einem Finger der Bedienungshand erreicht und betätigt werden können, und zwar in Längsrichtung des Fahrzeugs.

Besonders vorteilhaft ist es, wenn an der dem Armaturenbrett des Fahrzeugs zugewandten Unterseite des Rahmens an geeigneter Stelle zumindest eine Auflicht-Beleuchtungseinrichtung für die im Armaturenbrett befindlichen Instrumente vorgesehen ist. Eine derartige Beleuchtungseinrichtung schafft eine optimale Ausleuchtung des Armaturenbretts, ohne den Fahrer zu blenden. Eine derartige Beleuchtungseinrichtung ist im Störungsfalle leicht zugänglich.

Durch die Erfindung wird somit ein besonders einfach aufgebauter Schalter-Tragkörper mit Mehrfachfunktion (Schalter einrichtung, Kontrolleinrichtung, Auflicht-Beleuchtungseinrichtung) geschaffen, der ein in sich geschlossenes vom Fahrer aus betrachtet umgekehrt U-förmiges Formteil sein kann. Die Schalter sowie die Kontrolleinrichtungen sind auf dem Tragkörper visuell sehr übersichtlich und funktionsgerecht angeordnet und können vom Fahrer leicht erreicht werden. Aufgrund des einfachen Aufbaus eignet sich die Schaltanordnung insbesondere für Nutzfahrzeuge des Straßenverkehrs, bei denen das eigentliche Armaturenbrett vergleichsweise weit vom Fahrer entfernt ist und dennoch viele Schalter auf einfache Weise betätigt werden müssen, die nicht im Innern der Lenkradnabe oder an Kragarmen gemäß DE-OS 28 27 338 untergebracht werden können.

Die Erfindung wird nachfolgend anhand eines Ausführungsbeispiels unter Bezugnahme auf die Zeichnung näher beschrieben;

es zeigen:

Fig. 1 eine perspektivische Ansicht einer Schalt-Lenkrad-Anordnung eines Nutzfahrzeuges,

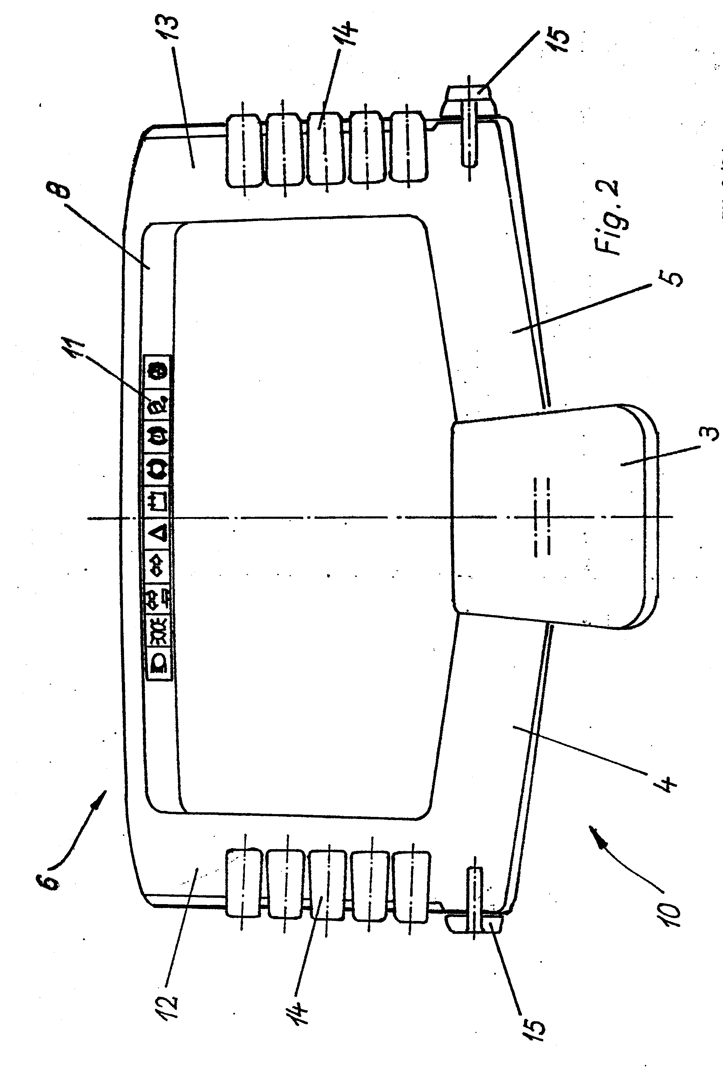

Fig. 2 eine Draufsicht auf die Anordnung gemäß Fig. 1 unter Weglassung des Lenkrades,

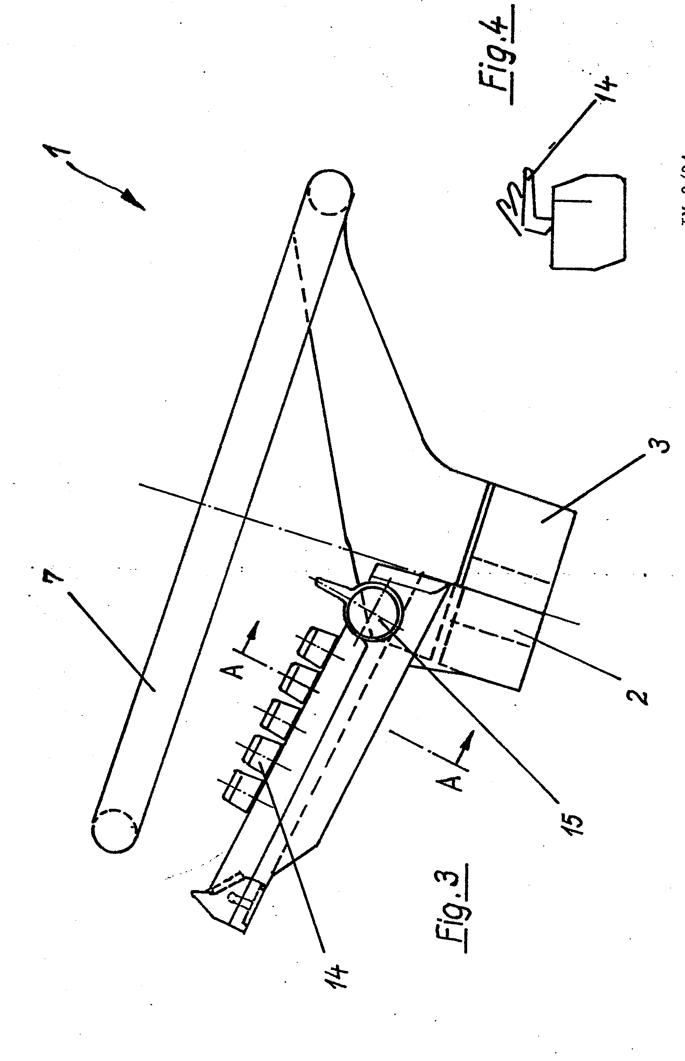

Fig. 3 eine schematische Seitenansicht der Anordnung, und

Fig. 4 einen Schnitt längs der Linie A-A der Fig. 3.

Das in der Zeichnung veranschaulichte Ausführungsbeispiel einer Schalt-Lenkradanordnung 1 für ein Kraftfahrzeug umfaßt neben dem Lenkrad 7, der Lenksäule 2 und dem Lenkstock 3 einen unterhalb der Lenkradebene nahe der Lenksäule 2 am Lenkstock 3 angebrachten Rahmen 10, der in einer parallelen Ebene zum Lenkrad 7 liegt. Auf dem Rahmen 10 sind kranzartig oberseitig in Querrichtung des Fahrzeugs Kontrolleinrichtungen 11, beispielsweise Kontrolleuchten, und seitlich Schalterhebel 14 sowie Drehschalter 15 vorgesehen. Der Rahmen 10 ist in bezug auf des Lenkrad 7 so bemessen, daß in Lenkraddraufsicht die obere Hälfte des Lenkrades vom Rahmen 10 in etwa umschlossen ist. Ein Fahrzeugführer kann aus seiner Perspektive außerhalb des Lenkradumfanges sämtliche vorgenannten Kontrolleinrichtungen und Schalterhebel sehen und einfach mit der Hand erreichen. Durch das Lenkrad und durch das Innere des geschlossenen Rahmens 10 kann gleichzeitig das Armaturenbrett 17 des Fahrzeugs im dortigen Bereich eingesehen werden, wo beispielsweise die Tachometeranzeige liegt.

Der Rahmen 10 ist als einstückiges Formteil ausgebildet und besitzt insbesondere im wesentlichen in Querrichtung des Fahrzeugs sich erstreckende Querarme 4 und 5, die in ihrer Basis mit dem Lenkradstock 3 fest verbunden sind. An den seitlich äußeren Enden der Querarme 4, 5 ist ein umgekehrt U-förmiger Schalterrahmenteil 6 angebracht, dessen Basis 8 der Fahrzeugvorderseite 9 zugewandt ist, wobei die ebenflächige Basisoberseite zumindest teilweise derart abgewinkelt ist, daß ein Fahrzeugführer im wesentlichen senkrecht auf diese Abwinklungsfläche blicken kann. In oder an der abgewinkelten Fläche befinden sich die Kontrolleinrichtungen 11. Der Schalterrahmenteil 6 des Rahmens 10 umfaßt ferner seitliche in etwa in Fahrzeuglängsrichtung sich erstreckende Schenkel 12, 13, die auf der Oberseite ebenfalls ebenflächig ausgebildet sind und die Schalterhebel 14 enthalten.

Jeder Schalterhebel 14 ist in Seitenansicht im wesentlichen L-förmig gestaltet und kann von einem Fahrzeugführer von oben für ein Niederdrücken bedient und in Gegenrichtung für ein Herausziehen bzw. Schwenken des Schalters von seitlich außen untergriffen werden. Die Schalterhebel 14 sind in zwei oder mehr Stellungen betätigbar.

An der Verbindungsstelle zwischen den Querarmen 4, 5 und den zugeordneten Schenkeln 12, 13 des Rahmenteils 6 sind zusätz lich Drehschalter 15 angebracht, deren Drehachse in Querrichtung des Fahrzeugs verläuft und die in der Rahmenebene gelegen sind. Die Drehschalter 15 besitzen ein radial sich erstreckendes Betätigungsglied 16, das zum Fahrerkopf nach oben weist, wobei es nach vorne und nach hinten betätigt bzw. geschwenkt werden kann.

**Ansprüche**

1. Schalt-Lenkrad-Anordnung (1) für ein Kraftfahrzeug, mit unterhalb der Lenkradebene nahe der Lenksäule (2) am Lenkstock (3) angebrachten, im wesentlichen in Fahrzeugquerrichtung sich erstreckenden Querarmen (4, 5), die zur Befestigung von Bedienungsschaltern des Fahrzeugs dienen, dadurch gekennzeichnet, daß ein im wesentlichen U-förmig ausgebildeter Schalterrahmenteil (6) mit den lenksäulenfernen Enden der Querarme (4, 5) fest verbunden ist, der in einer in etwa lenkradparallelen Ebene liegt und dessen Basis (8) der Fahrzeugvorderseite (9) zugewandt ist.

2. Anordnung nach Anspruch 1, dadurch gekennzeichnet, daß Querarme (4, 5) und U-förmiger Schalterrahmenteil (6) als einstückiger in Lenkraddraufsicht im wesentlichen rechteckiger geschlossener Rahmen (10) ausgebildet sind.

3. Anordnung nach Anspruch 2, dadurch gekennzeichnet, daß der Rahmen (10) in bezug auf das Lenkrad (7) so bemessen ist, daß in Lenkraddraufsicht die obere Hälfte des Lenkrades vom Rahmen (10) in etwa umschlossen ist.

4. Anordnung nach Anspruch 1 bis 3, dadurch gekennzeichnet, daß die Querarme (4, 5) fest und integriert mit dem Lenkstock (3) ausgebildet sind.

5. Anordnung nach Anspruch 1 bis 4, dadurch gekennzeichnet, daß die Basis (8) des U-förmigen Schalterrahmenteils (6) oberseitig ebenflächig, jedoch abgewinkelt ist, so daß in bezug auf eine Horizontalebene die Basisoberseitenabwinklung größer als die Abwinklung bzw. Neigung des Lenkrades (7) ist.

6. Anordnung nach Anspruch 1 bis 5, dadurch gekennzeichnet, daß auf der ebenflächigen Oberseite und längs der U-förmigen Rahmenteilbasis - (8) Kontrolleinrichtungen (11) des Fahrzeugs angeordnet sind.

7. Anordnung nach Anspruch 1 bis 6, dadurch gekennzeichnet, daß auf der ebenflächigen Oberseite und längs der Schenkel (12, 13) des U-förmigen Rahmenteils (6) Zwei- oder Mehrstellungs-Schalterhebel (14) vorgesehen sind.

8. Anordnung nach Anspruch 7, dadurch gekennzeichnet, daß die Schalterhebel (14) in Seitenansicht L-Form aufweisen und von oben bedient und bei einer Betätigung in Gegenrichtung von seitlich außen von einer Bedienungsperson untergriffen werden können.

9. Anordnung nach Anspruch 8, dadurch gekennzeichnet, daß an jedem Schenkel (12, 13) ca. vier bis fünf Schalterhebel (14) vorgesehen sind.

10. Anordnung nach Anspruch 1 bis 5, dadurch gekennzeichnet, daß im Bereich der Verbindungsstelle zwischen Querarm (4 bzw. 5) und zugeordnetem Schenkel (12 bzw. 13) des Rahmenteils zumindest ein Drehschalter (15) vorgesehen ist, dessen Drehachse in Querrichtung des Fahrzeugs und in der Rahmenebene gelegen ist und dessen radial sich erstreckendes Betätigungsglied (16) nach oben weist.

11. Anordnung nach Anspruch 1 bis 10, dadurch gekennzeichnet, daß an der dem Armaturenbrett (17) des Fahrzeugs zugewandtem Unterseite des Rahmens (10) zumindest eine Auflicht-Beleuchtungseinrichtung für die im Armaturenbrett (17) befindlichen Instrumente vorgesehen ist.

7

17

10

9

16

3

Fig. 1

0 210 293

IM 9/84

Fig.2

IM 9/84

0 210 293

Fig.3

Fig.4

7

1

14

A

A

15

2

3

14

IM 9/84

0 210 293

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 421 750 (FRANZ KIRSTEN ELEKTRONISCHE SPEZIALFABRIK) | | B 60 K 37/06<br>B 60 Q 1/14 |
| | --- | | |
| A | DE-A-2 805 583 (AUDI) | | |
| | --- | | |
| A | US-A-4 518 836 (WOOLDRIDGE) | | |
| | --- | | |
| A | US-A-4 448 276 (NAKAMOTO) | | |
| | --- | | |
| A | REVUE AUTOMOBILE, Band 75, Nr. 9, 26. Februar 1981, Bern, CH; "Les tableaux du futur" | | |
| | --- | | **RECHERCHIERTE SACHGEBIETE** (Int. Cl.4) |
| A | DE-A-3 113 509 (FIAT) | | |
| | --- | | B 60 K<br>B 60 Q |
| D,A | DE-A-2 827 338 (MASCHINENFABRIK AUGSBURG-NÜRNBERG) | | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 06-03-1986 | PIRIOU J.C. |